# EUROPEAN PATENT SPECIFICATION

(11) **EP 4 019 585 B1**
(45) Date of publication and mention of the grant of the patent: **21.10.2026**
(21) Application number: 20854036.9
(22) Date of filing: 24.06.2020
(51) Int. Cl.: C08L 27/06, C08K 5/12, C09J 127/06, C09J 11/06, D06N 3/00, D06N 3/06, C08K 5/098

(54) **COMPOSITION COMPRISING POLYVINYL CHLORIDE, USE THEREOF AND ARTIFICIAL LEATHER OBTAINED THEREFROM**
ZUSAMMENSETZUNG MIT POLYVINYLCHLORID, IHRE VERWENDUNG UND DARAUS HERGESTELLTES KUNSTLEDER
COMPOSITION COMPRENANT DU POLYCHLORURE DE VINYLE, SON UTILISATION ET CUIR ARTIFICIEL OBTENU À PARTIR DE CETTE DERNIÈRE

(30) Priority: 20.08.2019 CN 201910766709
(43) Date of publication of application: 29.06.2022
(73) Proprietor: Benecke-Changshun Auto Trim (Zhangjiagang) Co., Ltd., Zhangjiagang, Jiangsu 215632 (CN)
(72) Inventor: CHEN, Hongmei, Zhangjiagang, Jiangsu 215632 (CN)
(74) Representative: Preusser, Andrea
(86) International application number: PCT/CN2020/098029
(87) International publication number: WO 2021/031693

(56) References cited:
- CN-A- 1 207 704
- CN-A- 1 207 704
- CN-A- 101 050 293
- CN-A- 101 570 938
- CN-A- 101 570 938
- CN-A- 101 970 720
- US-A- 4 161 472
- US-A1- 2007 238 827
- "Plastics Materials ED - Brydson J A", 1 January 1999, PLASTICS MATERIALS (7TH ED.), BUTTERWORTH HEINEMANN (REFEREX), PAGE(S) 1 - 920, ISBN: 978-0-7506-4132-6, XP040425298
- "Plastics Additives - Rapra market Report", 1 March 2005, RAPRA TECHNOLOGY LIMITED, Shawbury, Shrewsbury, Shropshire, SY4 4NR, UK, ISBN: 978-1-85-957499-7, article GEOFFREY PRITCHARD: "Plastics Additives - Rapra market Report", pages: 1 - 210, XP055116414
- HUANG CHEN , HAO TONG-HUI , ZHANG QUN-CHAO , JIANG TAO: "Effect of Calcium Carbonate on Rheological and Mechanical Properties of Polyvinyl Chloride Coatings", CHINESE JOURNAL OF COLLOID & POLYMER, vol. 37, no. 1, 15 March 2019 (2019-03-15), pages 12 - 14, XP055782077, ISSN: 1009-1815, DOI: 10.13909/j.cnki.1009-1815.2019.01.004

## Description

### Technical Field

The present invention relates to an artificial leather comprising polyvinyl chloride.

### Background Art

Artificial leather is a polymer material preparation, and its usual structure is a surface layer plus a bottom support layer, wherein the surface layer and the bottom support layer are bonded with an adhesive. Artificial leather has a very wide range of uses, especially widely in the vehicle industry. For example, as a skin material, it is used for producing parts such as vehicle interiors, bumpers, dashboards, doors, side skirts, and anti-scratch devices.

Polyvinyl chloride (i.e. PVC, the terms "PVC" and "polyvinyl chloride" are used interchangeably hereinafter) is the main raw material in the production and development of artificial leather. Artificial leather made of polyvinyl chloride has good strength and wear resistance, and has simple and easy production, abundant raw materials, uniform product quality, ease of tailoring and use, light weight, water resistance, and low costs, so it is widely used as a skin material for automotive parts.

Generally, when artificial leather is used as a skin material in the vehicle industry, it is common in the prior art to adhere and laminate artificial leather on resin substrates of vehicle parts to form desired parts, such as vehicle bumpers, dashboards, cushions, inlaid panels, and door panels. For example, artificial leather is embedded in a mold, and then a molten base resin is low-pressure injection molded onto the artificial leather, thereby integrally forming the desired part.

The low-pressure injection molding process has many advantages. For example, the injection pressure of the low-pressure injection molding process is merely less than half of that of a traditional injection molding process; low-pressure injection molding minimizes the frictional heat and shear at a pouring gate and at the same time improves the processing performance; low-pressure injection molding eliminates the pressure holding time, and the overall production cycle time is shortened compared with the traditional high pressure; low-pressure injection molding reduces the mold clamping pressure of an injection molding machine by two-thirds, eliminating the need to use relatively expensive hardened rigid molds.

A high temperature (usually 170-210°C) is applied to artificial leather during the low-pressure injection molding process. Such a high temperature poses a challenge to the peel resistance between the surface layer and the bottom support layer of the artificial leather. The high temperature may cause the surface layer and the bottom support layer of the artificial leather to separate, causing delamination and bulging in the artificial leather, so that the molded product has an uneven surface or even damage.

In addition, automobiles containing vehicle parts thus molded may experience extreme weather during use. For example, in summer, such vehicles may experience high temperature exposure, and in winter, such vehicles may experience low temperatures and severe cold. These extreme weathers also damage the peel resistance between the surface layer and the bottom support layer of the artificial leather, causing delamination or bulging in the artificial leather.

CN101570938 is concerned with a method for production of an ultrasonic wave embossed release paper artificial leather, wherein the artificial leather is composed of a top PVC layer, a foamed middle PVC layer and a bottom material bonding layer of PVC. In the Examples CN101570938 describes the use of P440 PVC paste resin in the top PVC layer and bottom material bonding layer.

In order to make the artificial leather suitable for the low-pressure injection molding process and adapt to the extreme weather environments in which vehicles are used, it is desirable to provide a composition for use between the surface layer and the bottom support layer of the artificial leather to improve the adhesion between the surface layer and the bottom support layer of the artificial leather.

### Summary of the Invention

As described above, in the field of artificial leather, there is a need for a composition for the manufacture of artificial leather, which can improve the adhesion between the surface layer and the bottom support layer of the artificial leather, so that the artificial leather can withstand high-temperature processing and extreme climate changes.

In order to solve this technical problem, the present invention provides an artificial leather as indicated in claim 1. The adhesive layer in the artificial leather is formed form a composition comprising polyvinyl chloride, wherein the composition comprises:
polyvinyl chloride particles, wherein the particle size of the polyvinyl chloride particles is in a bimodal distribution with a first peak particle size in the range of 0.5 µm to 1.5 µm and a second peak particle size in the range of 5 µm to 15 µm, and the particles have a D₁₀ in the range of 0.6 µm to 3.6 µm, a D₅₀ in the range of 1 µm to 13 µm, and a D₉₀ in the range of 12 µm to 20 µm;
a plasticizer; and
a stabilizer.

The present invention further relates to the use of the composition comprising polyvinyl chloride according to the present invention as an adhesive between the surface layer and the bottom support layer of artificial leather, as indicated in claim 10.

The present invention further relates to a use of the artificial leather as indicated in claim 11.

It has been unexpectedly found that when the composition of the present invention is used as an adhesive between the surface layer and the bottom support layer of artificial leather, the adhesion between the surface layer and the bottom support layer is significantly improved. Detailed Description of Embodiments

The present invention will be further described in detail below in conjunction with the specific embodiments of the present invention. The specific embodiments described therein are intended to clearly illustrate the given exemplary embodiments of the present invention, and are not intended to limit the scope of the present invention. The scope of the present invention is defined by the claims.

Unless otherwise specified, all technical and scientific terms used in the specification have meanings commonly understood by those skilled in the art.

In the specification, unless otherwise stated, the percentages, parts, etc. given in the description are all by weight.

In a first aspect of the present invention, the present invention relates to an artificial leather having a surface layer, a bottom support layer and an adhesive layer positioned therebetween, wherein the adhesive layer is formed from a composition comprising polyvinyl chloride, wherein the composition comprises:
polyvinyl chloride particles,
a plasticizer; and
a stabilizer.

In the present invention, there is no special requirement for the polyvinyl chloride suitable for the composition, as long as it is suitable for forming an adhesive for artificial leather. Person skilled in the art would know how to select a suitable polyvinyl chloride to form the composition of the present invention. Generally, the polyvinyl chloride used for preparing the polyvinyl chloride artificial leather itself can also be used in the present invention. For example, polyvinyl chloride available from Shanghai Chlor-Alkali Chemical Co., Ltd., Shanghai, China, under the trade name P440 and polyvinyl chloride available from Formosa Plastics Corporation, New Jersey, USA, under the trade name KVH can both be used for the composition of the present invention.

The polyvinyl chloride suitable for the present invention is used in the form of particles and is contained in the composition in the form of particles. The particle size of the polyvinyl chloride particles suitable for being added to the composition of the present invention is in a bimodal distribution with a first peak particle size in the range of 0.5 µm to 1.5 µm and a second peak particle size in the range of 5 µm to 15 µm, and the particles have a D₁₀ in the range of 0.6 µm to 3.6 µm, a D₅₀ in the range of 1 µm to 13 µm, and a D₉₀ in the range of 12 µm to 20 µm.

In one embodiment, the particle size of the polyvinyl chloride particles suitable for being added to the composition of the present invention is in a bimodal distribution with a first peak particle size in the range of 1 µm to 1.5 µm and a second peak particle size in the range of 6 µm to 12 µm, and the particles have a D₁₀ in the range of 0.6 µm to 2.0 µm, a D₅₀ in the range of 1 µm to 6 µm, and a D₉₀ in the range of 12 µm to 15 µm.

Preferably, the polyvinyl chloride suitable for the present invention has a low gelling temperature and a high melting temperature, causing the resulting composition to have a better adhesion. In one embodiment, the gelling temperature of the polyvinyl chloride is in the range of 70°C to 110°C, for example, in the range of 90°C to 110°C, and the melting temperature of the polyvinyl chloride is in the range of 178°C to 195°C, for example in the range of 185°C to 190°C.

The gelling temperature and melting temperature of the polyvinyl chloride suitable for the present invention are measured by means of a RS600 rheometer, wherein the gelling temperature, T_{gel}, is the temperature when the damping coefficient = 0, i.e. Tan s = 0; the melting temperature, Tm, is the temperature when the storage modulus = the loss modulus, i.e. G' = G".

Preferably, the number-average molecular weight, Mn, of the polyvinyl chloride suitable for the present invention is in the range of 70,000 to 80,000 g/mol, preferably in the range of 75,000 to 80,000 g/mol. In a preferred embodiment, the molecular weight distribution, Mw/Mn, of the polyvinyl chloride suitable for the present invention is in the range of 1.5 to 3.0, for example, in the range of 1.8 to 2.5. The number-average molecular weight and the molecular weight distribution of the polyvinyl chloride are tested according to the test method described in the experimental section herein.

In the composition of the present invention, the polyvinyl chloride particles are used in their usual amount, as long as the amount of the polyvinyl chloride particles used is such that the resulting composition can be used as an adhesive. Person skilled in the art would select an appropriate amount of polyvinyl chloride particles to form the composition of the present invention according to practical application requirements. In one embodiment, the content of the polyvinyl chloride particles in the composition of the present invention is in the range of 45% to 65% by weight, based on the total weight of the composition of the present invention. Preferably, the content of the polyvinyl chloride particles in the composition of the present invention is in the range of 50% to 60% by weight, based on the total weight of the composition of the present invention.

The composition comprising polyvinyl chloride of the present invention further comprises a plasticizer. In the composition comprising polyvinyl chloride of the present invention, the amount of the plasticizer is in the range of 30% to 50% by weight, based on the total weight of the composition of the present invention. In a preferred embodiment, the amount of the plasticizer in the composition of the present invention is in the range of 35% to 45% by weight. For example, in the composition comprising polyvinyl chloride of the present invention, the amount of the plasticizer may be in the range of 40% to 45%, based on the total weight of the composition of the present invention.

The plasticizer used in the composition comprising polyvinyl chloride of the present invention may be a high-temperature-resistant plasticizer. In one embodiment, the plasticizer used in the present invention is an unsymmetrical benzene-based plasticizer. In a specific embodiment, the unsymmetrical benzene-based plasticizer suitable for use in the present invention is a trialkyl trimellitate or a mixture thereof. For example, the alkyl therein is linear C₇-C₁₁ alkyl or linear C₈-C₁₀ alkyl.

In another embodiment, the plasticizer used in the composition comprising polyvinyl chloride of the present invention is an ortho-benzene-based plasticizer, such as a linear alkyl phthalate plasticizer, wherein the alkyl is, for example, linear C₇-C₁₁ alkyl or linear C₈-C₁₀ alkyl.

The composition comprising polyvinyl chloride further comprises a stabilizer. The stabilizer suitable for the present invention may be any suitable stabilizer suitable for the manufacture of artificial leather, such as organic epoxy stabilizers, calcium zinc stabilizers, and combinations thereof. Person skilled in the art would select a suitable stabilizer according to specific application occasions and requirements. In one embodiment, the stabilizer contained in the composition comprising polyvinyl chloride of the present invention is an organic epoxy stabilizer. In another embodiment, the stabilizer contained in the composition comprising polyvinyl chloride of the present invention is a calcium-zinc complex stabilizer. For example, in one embodiment, the stabilizer used in the present invention is a German Bear Brand calcium zinc stabilizer under the trade name MC 9656 EP, available from Baerlocher Plastic Additives (Jiangsu) Co., Ltd., Jiangsu, China.

In the composition comprising polyvinyl chloride of the present invention, the amount of the stabilizer may be in the range of 1% to 10% by weight, based on the total weight of the composition. In an exemplary embodiment of the present invention, the content of the stabilizer in the composition comprising polyvinyl chloride of the present invention may be in the range of 3% to 6% by weight.

The composition comprising polyvinyl chloride may further comprise other additives. For example, the composition comprising polyvinyl chloride may further comprise a surfactant, such as an anionic surfactant or a cationic surfactant. With regard to these other additives and the amounts thereof in the composition, person skilled in the art would make conventional selections according to specific application occasions and application requirements.

Another aspect of the present invention relates to the use of the composition comprising polyvinyl chloride as an adhesive in the manufacture of artificial leather, i.e. as an adhesive between the surface layer and the bottom support layer of the artificial leather. In particular, the composition comprising polyvinyl chloride is particularly suitable for use as a skin material for the manufacture of artificial leather for automobile parts by means of a low-pressure injection molding process. Preferably, the artificial leather is polyvinyl chloride artificial leather. More preferably, the artificial leather is artificial leather used for vehicle bumpers, dashboards, cushions, inlaid panels, door panels, etc., preferably polyvinyl chloride artificial leather.

The present invention further relates to a use of the artificial leather obtained by using the composition for the production of a bumper, a dashboard, a cushion, an inlaid panel, or a door panel of a vehicle..

### Technical Solution of the Invention

In general, the present invention includes the following technical solution:

An artificial leather according to claim 1, which comprises a composition comprising polyvinyl chloride as an adhesive layer between a surface layer and a bottom support layer, wherein the composition comprises:
polyvinyl chloride particles, wherein the particle size of the polyvinyl chloride particles is in a bimodal distribution with a first peak particle size in the range of 0.5 µm to 1.5 µm and a second peak particle size in the range of 5 µm to 15 µm, and the particles have a D₁₀ in the range of 0.6 µm to 3.6 µm, a D₅₀ in the range of 1 µm to 13 µm, and a D₉₀ in the range of 12 µm to 20 µm; preferably wherein the polyvinyl chloride particles have a first peak particle size in the range of 1 µm to 1.5 µm and a second peak particle size in the range of 6 µm to 12 µm, and the particles have a D₁₀ in the range of 0.6 µm to 2.0 µm, a D₅₀ in the range of 1 µm to 6 µm, and a D₉₀ in the range of 12 µm to 15 µm;
a plasticizer; and
a stabilizer.

In a preferred embodiment, the gelling temperature of the polyvinyl chloride particles is in the range of 70°C to 110°C, for example, in the range of 90°C to 110°C, and the melting temperature of the polyvinyl chloride particles is in the range of 178°C to 195°C, for example in the range of 185°C to 190°C.

In a preferred embodiment, the number-average molecular weight, Mn, of the polyvinyl chloride suitable for the present invention is in the range of 70,000 to 80,000 g/mol, preferably in the range of 75,000 to 80,000 g/mol. Further preferably, the molecular weight distribution, Mw/Mn, of the polyvinyl chloride suitable for the present invention is in the range of 1.5 to 3.0, for example, in the range of 1.8 to 2.5.

For the composition comprising polyvinyl chloride, it is preferable that the content of the polyvinyl chloride particles in the composition is in the range of 45% to 65% by weight, for example, in the range of 50% to 60% by weight, based on the total weight of the composition.

For the composition comprising polyvinyl chloride, it is preferable that the content of the plasticizer is 30% to 50% by weight, for example, 35% to 45% by weight, or 40% to 45% by weight, based on the total weight of the composition.

The plasticizer is preferably a high-temperature-resistant plasticizer. In some embodiments, the plasticizer is an unsym-benzene-based plasticizer or an ortho-benzene-based plasticizer, wherein the unsym-benzene-based plasticizer is, for example, a trialkyl trimellitate or a mixture thereof, with the alkyl being, for example, linear C₇-C₁₁ alkyl or linear C₈-C₁₀ alkyl, and the ortho-benzene-based plasticizer is, for example, a linear alkyl phthalate plasticizer, with the alkyl being, for example, linear C₇-C₁₁ alkyl or linear C₈-C₁₀ alkyl.

For the composition comprising polyvinyl chloride of the present invention, the stabilizer may be an organic epoxy stabilizer, a calcium zinc stabilizer, and a combination thereof.

In some embodiments, the amount of the stabilizer is in the range of 1% to 10% by weight, for example in the range of 3% to 6% by weight, based on the total weight of the composition comprising polyvinyl chloride of the present invention.

The present invention further relates to the use of the composition comprising polyvinyl chloride as an adhesive for artificial leather, preferably a polyvinyl chloride artificial leather.

The present invention further relates to the use of an artificial leather as noted above.

### Examples

The present invention is further illustrated below in conjunction with examples. These examples are given for exemplary and illustrative purposes only, and are not intended to limit the scope of the present invention in any way.

The percentages or parts given in the examples are by weight unless otherwise specified.

Unless otherwise specified, for the various materials used in the examples and comparative examples, the same name indicates the use of the same brand and the same batch of products.

### Determination of Number-Average Molecular Weight and Weight-Average Molecular Weight

The number-average molecular weight (Mn) was determined by means of gel permeation chromatography (GPC) according to DIN 55672-1 (date: March 2016). In addition to the number-average molecular weight, this method could also be used for determining the weight-average molecular weight (Mw) and the polydispersity d (the ratio of weight-average molecular weight (Mw) to number-average molecular weight (Mn), Mw/Mn). Tetrahydrofuran was used as an eluent. The determination was carried out relative to polystyrene standard. The column material was composed of a styrene-divinylbenzene copolymer.

Materials used in the examples:

| Material | Material Description |
|---|---|
| Polyvinyl chloride particles A (preferred solution of the present invention) | Trade name P440, available from Shanghai Chlor-Alkali Chemical Co., Ltd., Shanghai, China, wherein |
| | the first peak particle size was 1.0 µm, |
| | the second peak particle size was 6.65 µm, |
| | the particles had a D₁₀ of 0.765 µm, a D₅₀ of 1.384 µm and a D₉₀ of 12.606 µm |
| | the gelling temperature was 110°C |
| | the melting temperature was 182°C |
| | the Mn (g/mol) was 79300 |
| Polyvinyl chloride particles B (Comparative) | Trade name P70PS, available from Vinnolit, Germany, wherein |
| | the first peak particle size was 2.13 µm, |
| | the second peak particle size was 12.73 µm, |
| | the particles had a D₁₀ of 1.021 µm, a D₅₀ of 2.139 µm and a D₉₀ of 4.274 µm |
| | the gelling temperature was 110°C |
| | the melting temperature was 182°C |
| | the Mn (g/mol) was 71600 |
| Polyvinyl chloride particles C (the present invention) | Trade name KVH, available from Formosa Plastics Corporation, New Jersey, USA, wherein |
| | the first peak particle size was 1.5 µm, |
| | the second peak particle size was 12 µm, |
| | the particles had a D₁₀ of 1.35 µm, a D₅₀ of 5.47 µm and a D₉₀ of 14.3 µm |
| | the gelling temperature was 58°C |
| | the melting temperature was 192°C |
| | the Mn (g/mol) was 69300 |
| Plasticizer | Trioctyl trimellitate |
| Stabilizer | MC 9656 EP, a German Bear Brand calcium zinc stabilizer, available from Baerlocher Plastic Additives (Jiangsu) Co., Ltd., Jiangsu, China |

### Example 1 (Composition of the present invention)

Composition 1 comprising polyvinyl chloride was formulated according to the formula in Table 1.

**Table 1**

| Component | Amount, in parts by weight |
|---|---|
| Polyvinyl chloride particles A | 60 |
| Plasticizer | 40 |
| Stabilizer | 5 |

### Example 2 (Comparative composition)

Comparative composition 2 comprising polyvinyl chloride was formulated according to the formula in Table 2.

**Table 2**

| Component | Amount, in parts by weight |
|---|---|
| Polyvinyl chloride particles B | 60 |
| Plasticizer | 40 |
| Stabilizer | 5 |

### Example 3 (Composition of the present invention)

Composition 3 comprising polyvinyl chloride was formulated according to the formula in Table 3.

**Table 3**

| Component | Amount, in parts by weight |
|---|---|
| Polyvinyl chloride particles C | 60 |
| Plasticizer | 40 |
| Stabilizer | 5 |

### Effect experiment

For the effect experiment, a surface layer of a polyvinyl chloride artificial leather was prepared according to the composition in Table 4.

**Table 4**

| Component | Amount, in parts by weight |
|---|---|
| Polyvinyl chloride particles A | 60 |
| Plasticizer | 40 |
| Stabilizer | 5 |

A bottom support layer was used and was as follows:
The bottom support layer used in the experiment was made of a 100% PET white non-woven fabric, with 120 g/m².

### Example 4

### 1. Manufacturing of artificial leather

An artificial leather was prepared according to a general preparation method for polyvinyl chloride artificial leather. First, a release paper was sent on a machine, and the sent release paper was delivered to a coating machine for surface coating. Two layers were applied as the surface layer. First, a layer of the composition of Table 4 was applied on the release paper and then dried. Another layer of the composition of Table 4 was then applied on the dried layer to obtain a coated surface layer. The coated surface layer was dried. The dried surface layer was further coated with the composition 1 prepared in Example 1 to form a layer of the composition 1 on the surface layer as an adhesive layer. The bottom support layer was unrolled simultaneously. The unrolled bottom support layer covered the composition 1 layer and was then laminated. The laminated material was delivered to a drying unit for drying. After drying, the release paper was peeled from the resulting material. Artificial leather A was obtained.

### 2. Test of the peel force between the surface layer and the bottom support layer

Artificial leather A was tested using DIN 53357 of the German Institute for Standardization to determine the peel force between the surface layer and the bottom support layer. The size of the test sample was 50*200 mm, and the stretching speed was 100 mm/min.

### 3. Low-pressure injection molding

A vehicle door panel was manufactured according to the following steps.
a. a molten base resin for the vehicle door panel, at a temperature of 180°C, was fed from a hopper of a low-pressure injection molding machine and injected onto the surface of a fixed mold (the fixed mold was a mold located near the hopper) of the low-pressure injection molding machine, wherein the injection pressure was controlled to be between 1.5 and 35 bar;
b. artificial leather A was embedded between the fixed mold and a movable mold (the movable mold was a mold that was remote from the hopper relative to the fixed mold) of the low-pressure injection molding machine, with the bottom support layer of artificial leather A facing the fixed mold; and
c. the movable mold was pressed and translated to the fixed mold and locked, so that the molten base resin formed a molten base resin layer between artificial leather A and the surface of the fixed mold and was adhered to artificial leather A.

After cooling, molded vehicle door panel A was obtained.

The appearance of the resulting door panel was recorded.

The test results were recorded in Table 5 below.

### Examples 5 and 6

According to the procedure described in Example 4, artificial leather was prepared. The differences lay in that comparative composition 2 of Example 2 was used as an adhesive for artificial leather B of Example 5, and composition 3 of Example 3 was used as an adhesive for artificial leather C of Example 6.

According to the procedure described in Example 4, artificial leather B and artificial leather C were respectively tested for the peel force between the surface layer and the bottom support layer and underwent low-pressure injection molding. Door panel B was obtained by using artificial leather B according to the low-pressure injection molding process of Example 4. Door panel C was obtained by using artificial leather C according to the low-pressure injection molding process of Example 4.

The test results were recorded in Table 5 below.

**Table 5**

| | Corresponding composition | Artificial leather | Door panel | Peel force between surface layer and support layer of artificial leather | Appearance of door panel |
|---|---|---|---|---|---|
| Example 4 | Composition 1 | Artificial leather A | Door panel A | 60 N/5 cm | After injection molding, the artificial leather layer had no rupture, blisters, crumpling or other problems, and there was no scrapping. |
| Example 5 | Comparative composition 2 | Artificial leather B | Door panel B | 22 N/5 cm | There were pits, bulges and other problems on the surface, and the scrap ratio was 80% or more. |
| Example 6 | Composition 3 | Artificial leather C | Door panel C | 30 N/5 cm | Problems such as pitting and dents appeared on the surface, and the scrap ratio was 10% or less. |

## Claims

1. An artificial leather having a surface layer, a bottom support layer and an adhesive layer positioned therebetween, wherein the adhesive layer is formed from a composition comprising
polyvinyl chloride particles, wherein the particle size of the polyvinyl chloride particles is in a bimodal distribution with a first peak particle size in the range of 0.5 µm to 1.5 µm and a second peak particle size in the range of 5 µm to 15 µm, and the particles have a D₁₀ in the range of 0.6 µm to 3.6µm, a D₅₀ in the range of 1 µm to 13 µm, and a D₉₀ in the range of 12 µm to 20 µm; preferably wherein the particle size of the polyvinyl chloride particles is in a bimodal distribution with a first peak particle size in the range of 1 µm to 1.5 µm and a second peak particle size in the range of 6 µm to 12 µm, and the particles have a D₁₀ in the range of 0.6 µm to 2.0 µm, a D₅₀ in the range of 1 µm to 6 µm, and a D₉₀ in the range of 12 µm to 15 µm;
a plasticizer; and
a stabilizer.

2. An artificial leather as claimed in claim 1, wherein the gelling temperature of the polyvinyl chloride is in the range of 70°C to 110°C, for example, in the range of 90°C to 110°C, and the melting temperature of the polyvinyl chloride is in the range of 178°C to 195°C, for example in the range of 185°C to 190°C.

3. An artificial leather as claimed in claim 1 or 2, wherein the number-average molecular weight of the polyvinyl chloride is in the range of 70,000 to 80,000 g/mol, preferably in the range of 75,000 to 80,000 g/mol, and further preferably, the molecular weight distribution of the polyvinyl chloride is in the range of 1.5 to 3.0, for example, in the range of 1.8 to 2.5.

4. The artificial leather as claimed in any one of claims 1-3, wherein the content of the polyvinyl chloride particles is in the range of 45% to 65% by weight, for example, in the range of 50% to 60% by weight, based on the total weight of the composition.

5. The artificial leather as claimed in any one of claims 1-4, wherein the content of the plasticizer is 30% to 50% by weight, based on the total weight of the composition.

6. The artificial leather as claimed in claim 5, wherein the content of the plasticizer is 35% to 45% by weight, or 40% to 45% by weight, based on the total weight of the composition.

7. The artificial leather as claimed in any one of claims 1-5, wherein the plasticizer is an unsymmetrical benzene-based plasticizer or an ortho-benzene-based plasticizer, the unsymmetrical benzene-based plasticizer is, for example, a trialkyl trimellitate or a mixture thereof, with the alkyl being, for example, linear C₇-C₁₁ alkyl or linear C₈-C₁₀ alkyl, and the ortho-benzene-based plasticizer is, for example, a linear alkyl phthalate plasticizer, with the alkyl being, for example, linear C₇-C₁₁ alkyl or linear C₈-C₁₀ alkyl.

8. The artificial leather as claimed in any one of claims 1-7, wherein the stabilizer is an organic epoxy stabilizer, a calcium zinc stabilizer, and a combination thereof.

9. The artificial leather as claimed in any one of claims 1-8, wherein the amount of the stabilizer is in the range of 1% to 10% by weight, for example, in the range of 3% to 6% by weight, based on the total weight of the composition.

10. The use of the composition as claimed in any one of claims 1-9 as an adhesive for artificial leather, preferably a polyvinyl chloride artificial leather, wherein the adhesive is positioned between the surface layer and the bottom support layer of the artificial leather.

11. The use of the artificial leather as claimed in any one of claims 1-9 for the production of a bumper, a dashboard, a cushion, an inlaid panel, or a door panel of a vehicle.

## Patentansprüche

1. Ein Kunstleder mit einer Oberflächenschicht, einer unteren Trägerschicht und einer dazwischen angeordneten Klebstoffschicht, wobei die Klebstoffschicht aus einer Zusammensetzung gebildet ist, umfassend
Polyvinylchloridteilchen, wobei die Teilchengröße der Polyvinylchloridteilchen eine bimodale Verteilung mit einer ersten Peak-Teilchengröße im Bereich von 0,5 µm bis 1,5 µm und einer zweiten Peak-Teilchengröße im Bereich von 5 µm bis 15 µm aufweist und die Teilchen einen D₁₀-Wert im Bereich von 0,6 µm bis 3,6 µm, einen D₅₀-Wert im Bereich von 1 µm bis 13 µm und einen D₉₀-Wert im Bereich von 12 µm bis 20 µm aufweisen; wobei die Teilchengröße der Polyvinylchloridteilchen vorzugsweise eine bimodale Verteilung mit einer ersten Peak-Teilchengröße im Bereich von 1 µm bis 1,5 µm und einer zweiten Peak-Teilchengröße im Bereich von 6 µm bis 12 µm aufweist und die Teilchen einen D₁₀-Wert im Bereich von 0,6 µm bis 2,0 µm, einen D₅₀-Wert im Bereich von 1 µm bis 6 µm und einen D₉₀-Wert im Bereich von 12 µm bis 15 µm aufweisen;
einen Weichmacher; und
einen Stabilisator.

2. Kunstleder nach Anspruch 1, wobei die Geliertemperatur des Polyvinylchlorids im Bereich von 70 °C bis 110 °C, beispielsweise im Bereich von 90 °C bis 110 °C, liegt und die Schmelztemperatur des Polyvinylchlorids im Bereich von 178 °C bis 195 °C, beispielsweise im Bereich von 185 °C bis 190 °C, liegt.

3. Kunstleder nach Anspruch 1 oder 2, wobei das Zahlenmittel des Molekulargewichts des Polyvinylchlorids im Bereich von 70.000 bis 80.000 g/mol, vorzugsweise im Bereich von 75.000 bis 80.000 g/mol, liegt und ferner vorzugsweise die Molekulargewichtsverteilung des Polyvinylchlorids im Bereich von 1,5 bis 3,0, beispielsweise im Bereich von 1,8 bis 2,5, liegt.

4. Kunstleder nach einem der Ansprüche 1 bis 3, wobei der Gehalt an Polyvinylchloridteilchen im Bereich von 45 Gew.-% bis 65 Gew.-%, beispielsweise im Bereich von 50 Gew.-% bis 60 Gew.-%, bezogen auf das Gesamtgewicht der Zusammensetzung, liegt.

5. Kunstleder nach einem der Ansprüche 1 bis 4, wobei der Gehalt an Weichmacher 30 Gew.-% bis 50 Gew.-%, bezogen auf das Gesamtgewicht der Zusammensetzung, beträgt.

6. Kunstleder nach Anspruch 5, wobei der Gehalt an Weichmacher 35 Gew.-% bis 45 Gew.-% oder 40 Gew.-% bis 45 Gew.-%, bezogen auf das Gesamtgewicht der Zusammensetzung, beträgt.

7. Kunstleder nach einem der Ansprüche 1 bis 5, wobei der Weichmacher ein Weichmacher auf Basis von unsymmetrischem Benzol oder ein Weichmacher auf Basis von ortho-Benzol ist, wobei der Weichmacher auf Basis von unsymmetrischem Benzol beispielsweise ein Trialkyltrimellitat oder ein Gemisch davon ist, wobei das Alkyl beispielsweise lineares C₇-C₁₁-Alkyl oder lineares C₈-C₁₀-Alkyl ist, und der Weichmacher auf Basis von ortho-Benzol beispielsweise ein Weichmacher aus linearem Alkylphthalat ist, wobei das Alkyl beispielsweise lineares C₇-C₁₁-Alkyl oder lineares C₈-C₁₀-Alkyl ist.

8. Kunstleder nach einem der Ansprüche 1 bis 7, wobei der Stabilisator ein organischer Epoxidstabilisator, ein Calcium-Zink-Stabilisator und eine Kombination davon ist.

9. Kunstleder nach einem der Ansprüche 1 bis 8, wobei die Menge des Stabilisators im Bereich von 1 Gew.-% bis 10 Gew.-%, beispielsweise im Bereich von 3 Gew.-% bis 6 Gew.-%, bezogen auf das Gesamtgewicht der Zusammensetzung, liegt.

10. Verwendung der Zusammensetzung nach einem der Ansprüche 1 bis 9 als Klebstoff für Kunstleder, vorzugsweise ein Polyvinylchlorid-Kunstleder, wobei der Klebstoff zwischen der Oberflächenschicht und der unteren Trägerschicht des Kunstleders angeordnet ist.

11. Verwendung des Kunstleders nach einem der Ansprüche 1 bis 9 zur Herstellung eines Stoßfängers, eines Armaturenbretts, eines Polsters, einer Einlegeplatte oder einer Türverkleidung eines Fahrzeugs.

## Revendications

1. Cuir artificiel ayant une couche de surface, une couche de support inférieure et une couche adhésive positionnée entre celles-ci, dans lequel la couche adhésive est formée à partir d'une composition comprenant
des particules de polychlorure de vinyle, dans lequel la taille des particules de polychlorure de vinyle présente une distribution bimodale avec une première taille de particule au pic dans la plage de 0,5 µm à 1,5 µm et une seconde taille de particule au pic dans la plage de 5 µm à 15 µm, et les particules ont un D₁₀ dans la plage de 0,6 µm à 3,6 µm, un D₅₀ dans la plage de 1 µm à 13 µm et un D₉₀ dans la plage de 12 µm à 20 µm ; de préférence, dans lequel la taille des particules de polychlorure de vinyle présente une distribution bimodale avec une première taille de particule au pic dans la plage de 1 µm à 1,5 µm et une seconde taille de particule au pic dans la plage de 6 µm à 12 µm, et les particules ont un D₁₀ dans la plage de 0,6 µm à 2,0 µm, un D₅₀ dans la plage de 1 µm à 6 µm et un D₉₀ dans la plage de 12 µm à 15 µm ;
un plastifiant ; et
un stabilisant.

2. Cuir artificiel selon la revendication 1, dans lequel la température de gélification du polychlorure de vinyle est dans la plage de 70 °C à 110 °C, par exemple dans la plage de 90 °C à 110 °C, et la température de fusion du polychlorure de vinyle est dans la plage de 178 °C à 195 °C, par exemple dans la plage de 185 °C à 190 °C.

3. Cuir artificiel selon la revendication 1 ou 2, dans lequel la masse moléculaire moyenne en nombre du polychlorure de vinyle est dans la plage de 70 000 à 80 000 g/mol, de préférence dans la plage de 75 000 à 80 000 g/mol, et en outre, de préférence, la distribution de masse moléculaire du polychlorure de vinyle est dans la plage de 1,5 à 3,0, par exemple dans la plage de 1,8 à 2,5.

4. Cuir artificiel selon l'une quelconque des revendications 1 à 3, dans lequel la teneur en particules de polychlorure de vinyle est dans la plage de 45 % à 65 % en poids, par exemple dans la plage de 50 % à 60 % en poids, sur la base du poids total de la composition.

5. Cuir artificiel selon l'une quelconque des revendications 1 à 4, dans lequel la teneur en plastifiant est de 30 % à 50 % en poids, sur la base du poids total de la composition.

6. Cuir artificiel selon la revendication 5, dans lequel la teneur en plastifiant est de 35 % à 45 % en poids, ou de 40 % à 45 % en poids, sur la base du poids total de la composition.

7. Cuir artificiel selon l'une quelconque des revendications 1 à 5, dans lequel le plastifiant est un plastifiant à base de benzène asymétrique ou un plastifiant à base d'ortho-benzène, le plastifiant à base de benzène asymétrique étant, par exemple, un trimellitate de trialkyle ou un mélange de ceux-ci, l'alkyle étant, par exemple, un alkyle linéaire en C₇-C₁₁ ou un alkyle linéaire en C₈-C₁₀, et le plastifiant à base d'ortho-benzène étant, par exemple, un plastifiant de phtalate d'alkyle linéaire, l'alkyle étant, par exemple, un alkyle linéaire en C₇-C₁₁ ou un alkyle linéaire en C₈-C₁₀.

8. Cuir artificiel selon l'une quelconque des revendications 1 à 7, dans lequel le stabilisant est un stabilisant époxy organique, un stabilisant calcium-zinc et une combinaison de ceux-ci.

9. Cuir artificiel selon l'une quelconque des revendications 1 à 8, dans lequel la quantité de stabilisant est dans la plage de 1 % à 10 % en poids, par exemple dans la plage de 3 % à 6 % en poids, sur la base du poids total de la composition.

10. Utilisation de la composition selon l'une quelconque des revendications 1 à 9 en tant qu'adhésif pour cuir artificiel, de préférence un cuir artificiel en polychlorure de vinyle, dans laquelle l'adhésif est positionné entre la couche de surface et la couche de support inférieure du cuir artificiel.

11. Utilisation du cuir artificiel selon l'une quelconque des revendications 1 à 9 pour la production d'un pare-chocs, d'un tableau de bord, d'un coussin, d'un panneau rapporté ou d'un panneau de porte d'un véhicule.
